# EUROPEAN PATENT APPLICATION

(11) **EP 1 623 763 A1**
(43) Date of publication of application: **08.02.2006**
(21) Application number: 05101909.9
(22) Date of filing: 11.03.2005
(51) Int. Cl.: B01L 3/00, F15C 5/00

(54) **Chip with cleaning cavity**

(71) Applicant: Agilent Technologies, Inc., Palo Alto, CA 94306 (US)
(72) Inventor: Reinhardt, Thomas, 76227, Karlsruhe-Durlach (DE); Baeuerle, Martin, 77830, Buehlertal (DE)
(74) Representative: Barth, Daniel Mathias

(57) **Abstract**

A chip (4) comprising at least one cleaning cavity (15) adapted for collecting material (26) when a moveable device (5) is contacted to and moved relative to the chip (4).

## Description

### BACKGROUND ART

The present invention relates to cleaning of moveable devices, in particular of valves and/or contacting chips, in particular microfluidic chips.

The field of microfluidic laboratory technology comprises chemical, physical and/or biological analysis, separation or synthesis of substances on a substrate with a microfluidic structure. There is a growing demand for such microfluidic processing systems that has also generated a need for small fluidic valves. Such miniaturized microfluidic devices have to fulfill a variety of requirements such as low dead volume and short flow paths with a cross section as constant as possible. A sufficient approach in the field is the use of microfluidic chips coupled to revolving valve elements for flow controlling the microfluidic processes executed within the chip. One solution for a flexible microfluidic chip is disclosed for example in the US 5,500,071. One solution for such a revolving valve element is disclosed for example in EP1520837A1. The teaching of both documents shall be incorporated herein by reference.

### DISCLOSURE OF THE INVENTION

It is an object of the invention to provide an improved cleaning of such moveable devices. The object is solved by the independent claims. Preferred embodiments are shown by the dependent claims.

According to embodiments of the present invention, the objects indicated are achieved by a chip comprising at least one cleaning cavity adapted for collecting material when a moveable device is contacted to and moved relative to the chip. Therefore, material accumulated to the moveable device can be removed from the moveable device by collecting the material in the at least one cleaning cavity of the chip. The relative movement between the chip and the moveable device leads to relative positions in which the material to be removed is positioned within such a cleaning cavity. This material consequently can fall into the cleaning cavity and is therefore removed from the moveable device. In addition further relative movement between the moveable device and the chip forces the respective material into the cleaning cavity because an edge surrounding the respective cleaning cavity acts like a wiper and removes the material from the moveable device such that the removed material can fall into the cleaning cavity.

In order to control the microfluidic processes executed within a microfluidic chip, a revolving valve element can move relative to the microfluidic chip. During this movement a contact surface of the revolving valve element is contacted to a surface of the microfluidic chip. That contact between said surfaces has to be performed with high quality in order to achieve a sufficient sealing effect between these contacted surfaces. Such a sealing is important, since the microfluidic processes operate with high fluidic pressures and very small volumes; e.g. in the range of micro-liters or even nano-liters. The advanced cleaning of the contact surface of the revolving valve element removes disturbing material. Therefore, grave disturbances of the sealing effect between the contacted surfaces by material intruding into the interface between the two contacted surfaces can effectively be avoided.

According to embodiments the chip is a microfluidic chip with at least one inlet port and at least one microfluidic channel, wherein each cleaning cavity is fluidically separated from each inlet port and each microfluidic channel. Therefore, the at least one cleaning cavity is integrated into a microfluidic chip adapted for executing microfluidic processes. Such a microfluidic chip is consequently provided with an additional feature, namely the cleaning of the moveable device.

According to other embodiments the chip is a cleaning chip adapted for using within a fluid separation system adapted for separating compounds of a fluid instead of a microfluidic chip comprising at least one inlet port and at least one microfluidic channel. Such a cleaning chip can easily be provided with a special arrangement of at least one cleaning cavity in order to improve the cleaning ability of the chip. The arrangement of the at least one cleaning cavity of such a cleaning chip does not have to consider ports or other fluidic path elements of a microfluidic chip. Therefore the cleaning effect of the at least one cleaning cavity and hence of the chip can be improved.

Embodiments may also include one or more of the following. The respective cleaning cavity is a through hole penetrating the chip or is a recess open to a contact surface of the moveable device and not penetrating the chip. The respective cleaning cavity is formed as a groove or as a slot or has a circular or oval cross section. The respective cleaning cavity is preferably manufactured within the chip by means of laser-cutting or jet-cutting. Producing the cleaning cavity as a through hole is very easy and in particular suitable for a cleaning chip comprising of only one layer of a flexible material. On the other hand the production of the cleaning cavity as a recess is suitable for a microfluidic chip comprising two or more layers of a flexible material.

Embodiments further relate to a frame for the chip, wherein said frame is adapted for positioning the chip within the frame. A conventional frame is disclosed for example in the International Patent Application No. EP04/050270 which teaching shall be incorporated herein by reference.

Embodiments further relate to a fluid separation system adapted for separating compounds of a fluid. The system comprises a fluid provider adapted for providing the fluid, a separation unit adapted for separating compounds of the fluid, the chip and a moveable device adapted for contacting the chip and adapted for providing a relative movement between the moveable device and the chip. In this system the chip can be used to clean the moveable device of the system.

Embodiments further relate to a method for cleaning a moveable device. The method comprises the steps of contacting the moveable device with a chip having at least one cleaning cavity, and moving the moveable device relative to the chip in order to clean the moveable device by collecting material in the at least one cleaning cavity.

Other embodiments relate to a software program or to a software product, which is preferably stored on a data carrier, controlling or executing the method according to embodiments, when run on a data processing system such as a computer.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig. 1 depicts a simplified schematic view of a fluid separation system according to an embodiment of the invention,

Fig. 2 depicts a perspective view of a frame according to an embodiment,

Fig. 3 depicts a perspective view of a chip according to an embodiment,

Fig. 4 depicts an enlarged detail IV of the chip of Fig. 3,

Fig. 5 depicts a perspective view of another chip,

Fig. 6 depicts an enlarged detail VI of the chip of Fig. 5,

Fig. 7 depicts an enlarged view of the detail VI of another embodiment of the chip,

Fig. 8a to 8c depict simplified and schematic sections of a chip during cleaning operation.

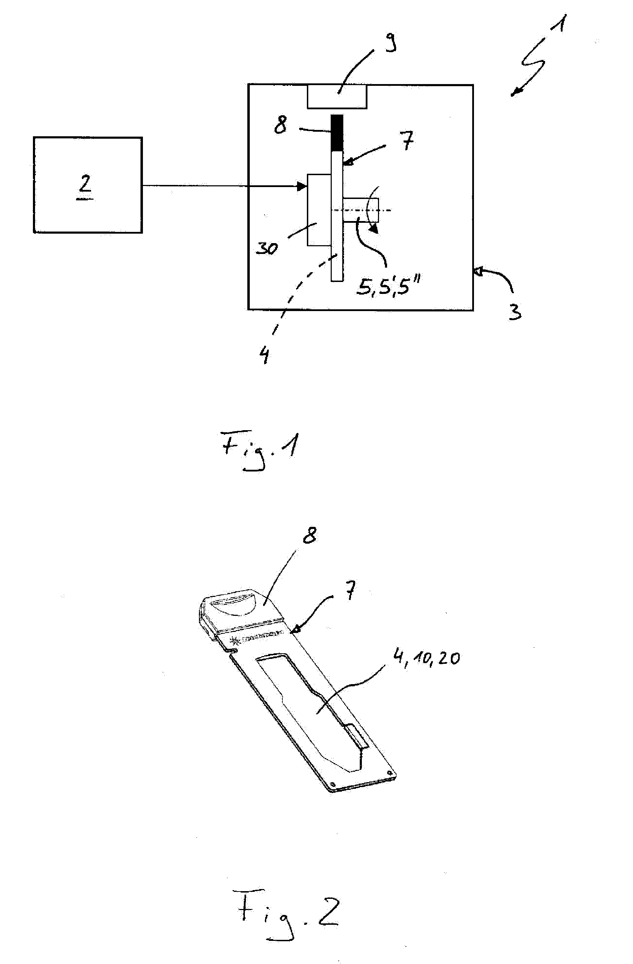

According to Fig. 1 a fluid separation system 1 comprises a fluid provider 2, a separation unit 3, a chip 4 and a moveable device 5. The system 1 is adapted for separating compounds of a fluid, in particular of a liquid. The provider 2 is adapted for providing the fluid comprising the compounds to be separated. The provider 2 supplies the fluid to the separation unit 3. In Fig. 1 this fluid supply is depicted by means of an arrow 6.

The separation unit 3 is adapted for separating compounds of the fluid, which is in particular a liquid. The separation unit 3 or the whole system 1 comprises or is a chromatography system, in particular a liquid chromatography system. Common are for example high performance liquid chromatography systems (HPLC). HPLC is a form of chromatography used to separate compounds that are dissolved in liquid.

The moveable device 5 is adapted for contacting the chip 4 and is further adapted for providing a relative movement between the moveable device 5 and the chip 4.

The chip 4 is preferably arranged within a frame 7. According to Fig. 2 such a frame 7 is adapted for positioning the chip 4 within the frame 7. The frame 7 is also adapted for using within the separation unit 3 of the system 1. The frame 7 may comprise a grip member 8 simplifying the handling of the frame 7. The chip 4 or the frame 7 may comprise at least one identification-tag not shown in the figures. Such an identification-tag may be e.g. arranged within the grip member 8 and may be a radio-frequency-chip. In case the frame 7 or the chip 4 is provided with such an identification-tag the system 1, in particular its separation unit 3, is preferably provided with a tag reader 9 adapted for providing one-way or bilateral data transmission between the identification-tag and the tag reader 9. According to Fig. 1 the frame 7 is positioned within the separation unit 3 by means of the movable device 5 and a connector 30 coupled to the fluid supply 6 of the provider 2.

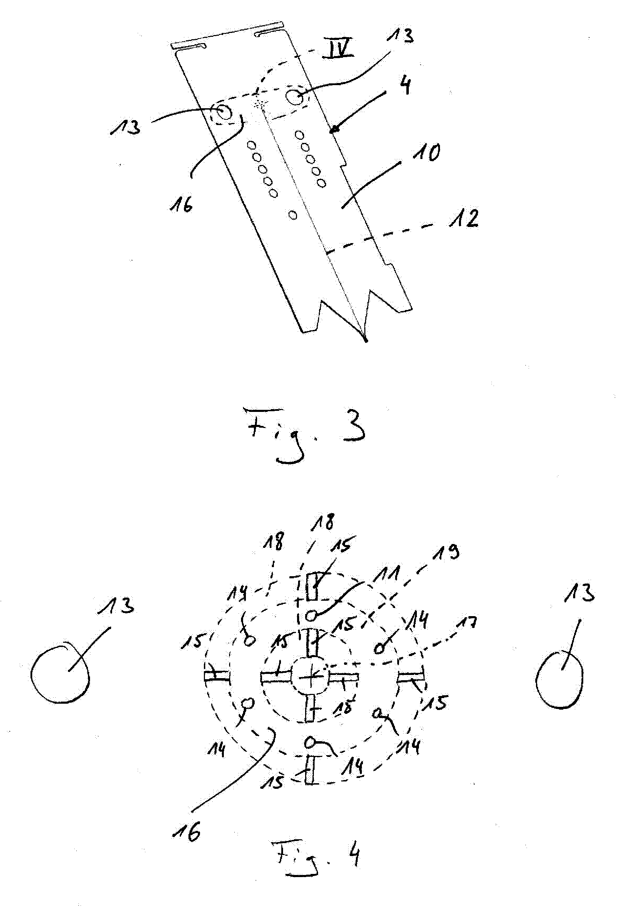

According to an embodiment of the present invention shown in Fig. 3 the chip 4 may be designed as a microfluidic chip 10 comprising at least one inlet port 11 (see Fig. 4) and at least one microfluidic channel 12. The microfluidic channel 12 depicted in Fig. 3 may be, for example, a separation column of a liquid chromatography system.

In the shown embodiment the chip 4 comprises at least two positioning openings 13. The separation unit 3 is provided with positioning pins (not shown) adapted for interacting with the positioning openings 13 in order to provide proper alignment of the chip 4 relative to the moveable device 5, when the frame 7 together with the chip 4 is inserted into the separation unit 3.

According to Fig. 4 the microfluidic chip 10 may comprise an arrangement of several ports. In this embodiment exist six ports, namely the at least one inlet port 11 and five other ports 14. Each of this other ports 14 may be designed as one of a through hole and an inlet port connected to a flow path within the microfluidic chip 10. The microfluidic channel 12 is such a flow path.

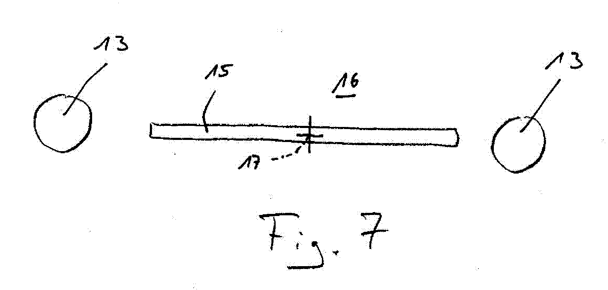

The chip 4 is provided with a least one cleaning cavity 15. Fig. 4 shows an example of a chip 4 having eight cleaning cavities 15. In the example of Fig. 6 the chip 4 is also provided with eight cleaning cavities. But in the example according to Fig. 7 the chip 4 has only one cleaning cavity 15. The number and arrangement of cleaning cavities 15 is not limited to the examples of the shown embodiments. Also the form and shape of the cleaning cavities 15 is not limited to the examples shown in the figures. As depicted in the figures 4, 6 and 7 each cleaning cavity 15 is formed as a groove or as a slot. It should be clear, that in other embodiments the at least one cleaning cavity 15 may also have a circular or an oval cross section. The cleaning cavities 15 may be provided by means of laser-cutting or jet-cutting the chip 4. With help of such manufacturing methods the cleaning cavities 15 may be provided with tiny dimensions. This may be appropriate with respect to a chip 4 designed as a microfluidic chip 10, because the cleaning cavities have to be arranged nearby the ports 11 or 14, respectively. Basically it is also possible to realize the cleaning cavities 15 by die-cutting or by injection embossing or by etching.

Since the chip 4 is designed as a microfluidic chip 10 each cleaning cavity 15 is fluidically separated from each port 11, 14 and therefore also from each microfluidic channel 12 of the microfluidic chip 10. The object of this separation is to avoid leakage within the arrangement of the chip 4 interacting with the moveable device 5.

Preferably the moveable device 5 is designed as revolving device 5'. Such a revolving device 5' is adapted for providing a rotating movement between the chip 4 and the revolving device 5' or a revolving member of the revolving device 5'. In a preferred embodiment the revolving device 5' comprises a revolving element (not shown) adapted for interacting with the chip 4. In particular the revolving device 5' is designed as a microfluidic valve 5" comprising in particular a revolving valve element (not shown). The moveable device 5 or the revolving device 5' or the microfluidic valve 5", respectively, comprises a contact surface 22 (see Fig. 8a-8c) adapted for interacting with the chip 4. The contact surface 22 is preferably provided at the respective revolving element, or the revolving valve element, respectively.

According to Fig. 3 and 4 the chip 4 comprises a surface 16 adapted for interacting with the contact surface 22 of the moveable device 5 or the revolving device 5' or the microfluidic valve 5", respectively. In use of the chip 4 the contact surface 22 and the surface 16 are contacted together and form an interface 23 (see fig. 8a-8c) between that surfaces 16, 22.

The contact surface 22 is adapted for controlling the ports 11 and 14 of the microfluidic chip 10. This controlling is achieved by adjusting the relative position between the moveable device 5 and the chip 4. To this end the contact surface 22 may be provided, for example, with a least one fluid conducting feature (not shown) adapted for providing a fluid connecting between at least two ports 11, 14 depending on the relative position between the moveable device 5 and the chip 4. For detailed explanation of such a microfluidic valve 5" see for example the aforementioned EP1520837A1.

Since the moveable device 5 is a revolving device 5' or a microfluidic valve 5", respectively, a revolving axis 17 (see figures 4, 6, 7) defines the rotary movement between the rotary device 5' and the chip 4. The revolving axis 15 stands on the drawing plane of the figures 4, 6 and 7, and in particular extends perpendicular to the surfaces 16, 22.

The rotary movement between the contacted surfaces 16, 22 defines cleaning zones 18 on the contact surface 22 of the moveable device 5. In the figures 4, 6 and 7 the cleaning zones 18 are limited by means of dash lines. The cleaning zones 18 are defined by the shape of the cleaning cavities 15 in combination with the relative movement between the surface 16 provided with the cleaning cavities 15 and the contact surface 22 to be cleaned.

In the embodiment of Fig. 4 the cleaning cavities 15 define two radially separated cleaning zones 18. Each cleaning zone 18 having the form of an annulus. Radially between the two cleaning zones 18 is defined an intermediate zone 19 also in form of an annulus. The ports 11 and 14 are arranged within this intermediate zone 19.

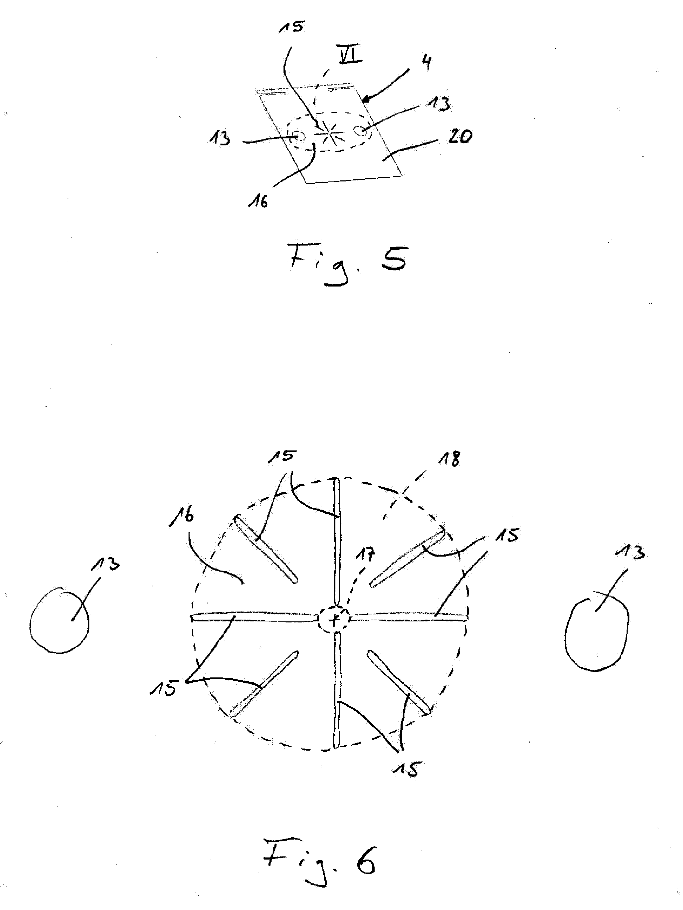

In another embodiment according to Fig. 5 the chip 4 can be designed as a cleaning chip 20. Such a cleaning chip 20 is also provided at its surface 16 with at least one cleaning cavity 15. An important difference between the cleaning chip 20 and the microfluidic chip 10 is that the cleaning chip 20 is not adapted for executing microfluidic processes within the chip 4. Therefore, the cleaning chip 20 does not comprise at least one of a microfluidic channel 12 and an inlet port 11. According to this, the arrangement of the cleaning cavities 1 does not depend on the positions of ports 11, 14 within the surface 16 of the chip 4. Consequently the cleaning ability of the cleaning chip 20 can be improved by adapting the arrangement of cleaning cavities 15 with respect to at least one of the number of the cleaning cavities 15, the geometric shape of the cleaning cavities 15 and the dimensions of the cleaning cavities 15.

Figures 6 and 7 show two preferred examples of such cleaning cavity arrangements. According to fig. 6 the cleaning cavity arrangement comprises eight cleaning cavities 15 having a star like arrangement with respect to the revolving **axis** 17 of the rotary movement between the revolving device 5' or the microfluidic valve 5", respectively, and the chip 4. This cleaning cavities 5 define a single cleaning zone 18 also having the shape of an annulus. Compared to the cleaning zones 18 of the example shown in fig. 4 the singly cleaning zone 18 according to the embodiment of fig. 6 covers an area which is significantly larger than the area covered by the two cleaning zones 18 of the embodiment according to fig. 4.

According to fig. 7 the surface 16 of the cleaning chip 20 comprises in another embodiment only one cleaning cavity 15 designed as a groove or slot. The dimensions of this cleaning cavity 15 can simply be adapted for cleaning the whole contact surface of the revolving device 5'. It is clear, that the two embodiments of the figures 6 and 7 are only examples not limiting the scope of the invention.

The cleaning principle of the chip 4 according to embodiments of the invention is explained in the following with respect to the figures 8a to 8c.

The figures 8a to 8c show schematically the interaction of the chip 4, which can be designed e.g. as a microfluidic chip 10 or as a cleaning chip 20, and the moveable device 5, which can be designed e.g. as a revolving device 5' or as microfluidic valve 5". In the depicted example chip 4 is a multi-layer chip 4 comprising three layers 21 of a flexible material, in particular plastics or synthetics. Preferably, a microfluidic chip 10 is designed as a multi-layer chip. On the other hand a cleaning chip 20 is preferably designed as a single-layer chip. Therefore, the cleaning chip 20 has reduced manufacturing costs and may be designed as a product for one-time-usage. The portion of the moveable device 5 depicted in the figures 8a to 8c typically is a moveable or revolving element, in particular a revolving valve element, of the moveable device 5, said element is provided with the contact surface 22. The chip 4, in particular the microfluidic chip 10 or the cleaning chip 20, respectively, is made of a flexible material having a hardness which is preferably as high as possible but smaller than the hardness of the contact surface 22 in order to avoid damage of the contact surface 22.

Fig. 8a shows a normal operation condition in which the contact surface 22 of the moveable device 5 contacts the surface 16 of the chip 4. The surface 16 and the contact surface 22 preferably are even or plane. Thus, the surfaces 16, 22 have a two-dimensional-contact and define an interface 23 between each other. Usually, the chip 4 and the moveable device 5 are pressed together in order to achieve a suitable sealing effect within the interface 23. That pressure is symbolized by arrows 24.

If the contact surface 22 of the moveable device 5 is clean, a high quality contact between the surfaces 16, 22 can be established. The sealing effect within the interface 23 depends on the quality of the contact between the surfaces 16, 22.

In a normal operation mode of the system 1 the moveable device 5 can be moved or is driven to move its contact surface 22 relative to the chip 4. This relative movement is symbolized by an arrow 25. According to different functions of the microfluidic chip 10 the moveable device 5 is adapted to adjust the contact surface 22 into at least one, preferably several, positions in order to control the at least one input port 11, and in particular also the other ports 14, of the microfluidic chip 10. During this normal operation mode an effective sealing in the interface 23 is very important in order to achieve a high quality performance of the system 1.

Fig. 8b shows an operation condition in which the contact surface 22 of the moveable device 5 is contaminated with material 26. That material 26 may be, for example, dirt, abrasion or dust or a combination thereof. In operation of the system 1 the material 26 may be disposed between the surfaces 16 and 22 and therefore disturbs the contact between that surfaces 16, 22. In the condition shown in fig. 8b the material 26 causes a gap 27 within the interface 23. The gap 27 between the surfaces 16, 22 affects the sealing and results in leakage symbolized by an arrow 28. In order to achieve high quality performance of the system 1 leakage within the interface 23 has to be avoided.

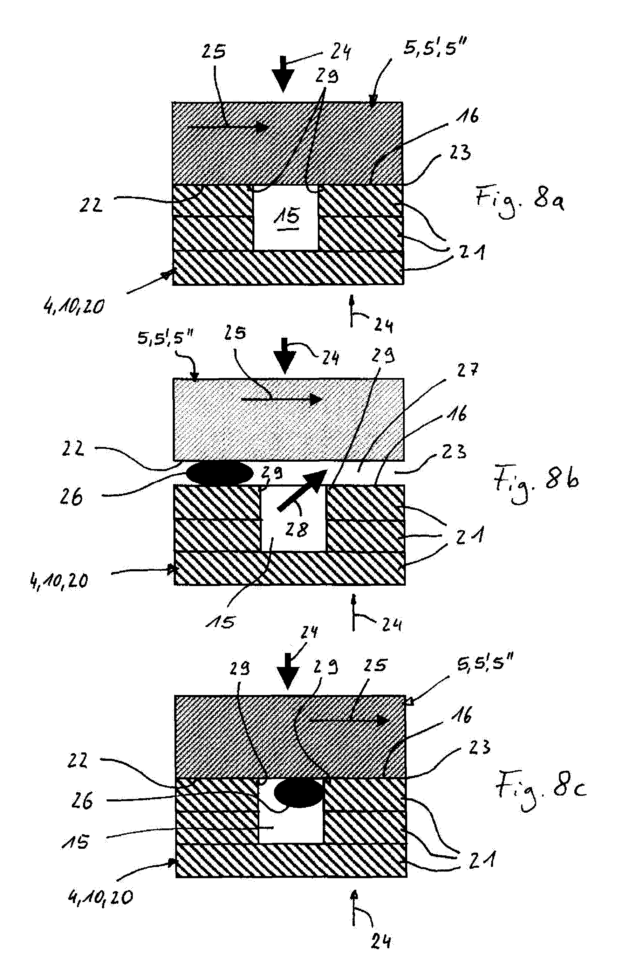

According to embodiments of the invention the chip 4 is provided with at least one cleaning cavity 15. The section depicted in the figures 8a to 8c shows a portion of the chip 4 provided with one of such cleaning cavities 15. As a result of the relative movement between the chip 4 and the moveable device 5 the material 26 is moved relative to the cleaning cavity 15. Consequently, the contact surface 22 contaminated with the material 26 arrives a relative position according to fig. 8c in which the material 26 faces the cleaning cavity 15. Thus, the material 26 can fall into the cleaning cavity 15. Additionally, further movement 25 of the contact surface 22 results in a wiping effect of an edge 29 of the cleaning cavity 15. That edge 29 encloses the cleaning cavity 15. The wiping or cleaning effect of the edge 29 is intensified by means of the pressure 24 forcing the two surfaces 16, 22 together.

Each cleaning cavity 15 is adapted to collect the material 26. This adaptation is achieved for example, by means of at least one of said edge 29 and appropriate dimensions of the profile of the cleaning cavity 15.

After the material 26 has entered the cleaning cavity 15 according to fig. 8c the material 26 remains within the cleaning cavity 15 even if further relative movement between the surfaces 16, 22 occurs. Therefore, the cleaning cavity 15 collects the material 26. Even if the material 26 adheres at the contact surface 22 the material 26 remains within the cleaning cavity 15. This is because the material 26 loosens and falls into the cleaning cavity 15, as a result of the further movement between the surfaces 16,22.

In the example of the figures 8a to 8c the cleaning cavity 15 is designed as a recess which is open to the contact surface 22 and which does not penetrate the chip 4. In another embodiment the cleaning cavity 15 may also be designed as a through hole penetrating the chip 4.

In order to clean the contact surface 22 of the moveable device 5 the system 1 preferably is operable in a cleaning mode. In said cleaning mode the system 1 or a controller (not shown) of the system 1 drives or actuates the moveable device 5 to move its contact surface 22 into or through at least one position which is not used in the normal operation mode, mentioned above, of the system. For example, in the normal operation mode the moveable device 5 performs a switching movement between two predetermined relative positions. In case of a revolving movement the rotation lies within a range of less than 360°, for example 60°. In the cleaning mode said controller drives the moveable device 5 such that the contact surface 22 arrives relative positions exceeding the range of predetermined movement of the normal operation mode. In the example mentioned above the moveable device 5 adjusts the contact surface 22 preferably for a full turn of 360° or more.

According to a preferred embodiment the frame 7 is provided with the chip 4, which is designed as a cleaning chip 20. The frame 7 also comprises an identification-tag, in particular a radio-frequency-chip, mentioned above. Under normal conditions the system 1 operates with a conventional microfluidic chip 10 comprising at least one inlet port 11 and at least one microfluidic channel 12. This conventional microfluidic chip 10 is not provided with any cleaning cavity 15. Preferably such a microfluidic chip 10 is positioned within a frame 7 and is inserted into the separation unit 3 together with the frame 7.

In order to clean the moveable device 5 the conventional microfluidic chip 10 has to be replaced by the chip 4, in particular by the cleaning chip 10. The cleaning chip 10 is inserted into the separation unit 3 together with its frame 7 which is provided with said identification-tag. After inserting the frame 7 with the cleaning 10 into the separation unit 3 the tag-reader 9 and the identification-tag start communication and transfer data. A controller (not shown) coupled to the tag-reader 9 is adapted for automatically start the cleaning mode of the system 1 when the cleaning chip 10 is inserted into the separation unit 3.

In order to implement this feature into the controller of the separation unit 3 said controller is provided with a software program. That software program is adapted for controlling or executing the cleaning method according to embodiments of the invention. That controller therefore comprises or is designed as a data processing system such as a computer.

## Claims

1. A chip (4) comprising at least one cleaning cavity (15) adapted for collecting material (26) when a moveable device (5) is contacted to and moved relative to the chip (4).

2. The chip (4) according to claim 1,
- wherein the chip (4) is a microfluidic chip (10) with at least one inlet port (11) and at least one microfluidic channel (12),
- wherein each cleaning cavity (15) is fluidically separated from each inlet port (11) and each microfluidic channel (12).

3. The chip according to claim 1,
wherein the chip (4) is a cleaning chip (20) adapted for using within a separation system (1) adapted for separating compounds of a fluid instead of a microfluidic chip (10) comprising at least one inlet port (11) and at least one microfluidic channel (12).

4. The chip (4) according to claim 1 or any one of the above claims,
wherein the cleaning cavity (15) or at least one of several cleaning cavities (15) comprises at least one of the following features:
- the respective cleaning cavity (15) is a through hole penetrating the chip (4) or a recess open to a contact surface(22) of the moveable device (5) and not penetrating the chip (4);
- the respective cleaning cavity (15) is formed as a groove or as a slot or has a circular or oval cross section;
- the respective cleaning cavity (15) is manufactured within the chip (4) by means of laser-cutting or jet-cutting or die-cutting or injection embossing or etching.

5. The chip (1) according to claim 1 or any one of the above claims, comprising at least one of the following features:
- the chip (4) is adapted for using within a fluid separation system (1) adapted for separating compounds of a fluid, wherein the system (1) is operable in a cleaning mode in which the moveable device (5) is driven to move a contact surface (22) of the moveable device (5) into or through at least one position not used in a normal operation mode of the system (1) in which normal operation mode the moveable device (5) is driven to control at least one inlet port (11) of a microfluidic chip (10) comprising the at least one inlet port (11) and at least one microfluidic channel (12);
- the chip (4) is flexible;
- the chip (4) is a cleaning chip (20) arranged within a frame (7) adapted for inserting the frame (7) together with the chip (4) into a fluid separation system (1) adapted for separating compounds of a fluid, wherein the frame (7) in particular comprises at least one identification-tag, in particular a radio-frequency-chip;
- the material (26) is at least one of dirt, abrasion, dust;
- the moveable device (5) is a microfluidic valve (5") comprising at least one moveable or revolving valve element comprising a contact surface (22) to be cleaned by means of the chip (4);
- the at least one cleaning cavity (15) is provided at a surface (16) of the chip (4);
- the moveable device (5) is a valve, in particular a microfluidic valve (5");
- the moveable device (5) is a revolving device (5');
- the chip (4) is adapted for interacting with a contact surface (22) of the moveable device (5).

6. A frame (7) for a chip (4) according to claim 1 or any one of the above claims, wherein the frame (7) is adapted for positioning the chip (4) within the frame (7).

7. A fluid separation system (1) adapted for separating compounds of a fluid, comprising:
- a fluid provider (2) adapted for providing the fluid,
- a separation unit (3) adapted for separating compounds of the fluid,
- a chip (4) according to claim 1 or any one of the above claims,
- a moveable device (5) adapted for contacting the chip (4) and adapted for moving relative to the chip (4).

8. The system (1) according to claim 7, comprising at least one of the following features:
- the moveable device (5) is driven to move a contact surface (22) of the moveable device (5) into or through at least one position not used in a normal operation mode of the system (1) in which normal operation mode the moveable device (5) is driven to control at least one inlet port (11) of a microfluidic chip (10) comprising the at least one inlet port (119 and at least one microfluidic channel (12);
- the system (1) is adapted for automatically activating a cleaning mode when a frame comprising the chip (4) and at least one identification-tag, in particular a radio-frequency-chip, is inserted and identified.

9. A method for cleaning a moveable device (5), comprising the steps of:
- contacting the moveable device (5) with a chip (4) having at least one cleaning cavity (15),
- moving the moveable device (5) relative to the chip (4) in order to clean the moveable device (5) by collecting material (26) in the at least one cleaning cavity (15).

10. The method according to claim 9,
wherein the movement is executed as a revolving movement with respect to a revolving axis (17) in particular extending perpendicular to the contacted surfaces (16, 22).

11. A software program or product, preferably stored on a data carrier, for controlling or executing the method of claim 9 or any one of the above claims, when run on a data processing system such as a computer.

## Amended claims

### Amended claims in accordance with Rule 86(2) EPC.

**1.** A chip (4) comprising at least one cleaning cavity (15) adapted for collecting material (26) when a moveable device (5) is contacted to and moved relative to the chip (4),
wherein, in case the chip (4) is a microfluidic chip (10) with at least one inlet port (11) and at least one microfluidic channel (12), each cleaning cavity (15) is fluidically separated from each inlet port (11) and each microfluidic channel (12).

**2.** The chip (4) according to claim 1,
wherein the chip (4) is a microfluidic chip (10) with at least one inlet port (11) and at least one microfluidic channel (12),
wherein each cleaning cavity (15) is fluidically separated from each inlet port (11) and each microfluidic channel (12).

**3.** The chip according to claim 1,
wherein the chip (4) is a cleaning chip (20) adapted for using within a separation system (1) adapted for separating compounds of a fluid instead of a microfluidic chip (10) comprising at least one inlet port (11) and at least one microfluidic channel (12).

**4.** The chip (4) according to claim 1 or any one of the above claims,
wherein the cleaning cavity (15) or at least one of several cleaning cavities (15) comprises at least one of the following features:
- the respective cleaning cavity (15) is a through hole penetrating the chip (4) or a recess open to a contact surface (22) of the moveable device (5) and not penetrating the chip (4);
- the respective cleaning cavity (15) is formed as a groove or as a slot or has a circular or oval cross section;
- the respective cleaning cavity (15) is manufactured within the chip (4) by means of laser-cutting or jet-cutting or die-cutting or injection embossing or etching;
- the respective cleaning cavity (15) is provided at a surface (16) of the chip (4).

**5.** The chip (1) according to claim 1 or any one of the above claims,
comprising at least one of the following features:
- the chip (4) is adapted for using within a fluid separation system (1) adapted for separating compounds of a fluid, wherein the system (1) is operable in a cleaning mode in which the moveable device (5) is driven to move a contact surface (22) of the moveable device (5) into or through at least one position not used in a normal operation mode of the system (1) in which normal operation mode the moveable device (5) is driven to control at least one inlet port (11) of a microfluidic chip (10) comprising the at least one inlet port (11) and at least one microfluidic channel (12);
- the chip (4) is flexible;
- the chip (4) is arranged within a frame (7) adapted for inserting the frame (7) together with the chip (4) into a fluid separation system (1) adapted for separating compounds of a fluid, wherein the frame (7) preferably comprises at least one identification-tag, in particular a radio-frequency-chip;
- the chip (4) is adapted for interacting with a contact surface (22) of the moveable device (5).
- the material (26) is at least one of dirt, abrasion, dust.

**6.** The chip (1) according to claim 1 or any one of the above claims, comprising at least one of the following features:
- the moveable device (5) is a valve (5") comprising at least one moveable or revolving valve element comprising a contact surface (22) to be cleaned by means of the chip (4);
- the moveable device (5) is a microfluidic valve (5"),
- the moveable device (5) is a revolving device (5').
- the chip (4) is adapted for interacting with a contact surface (22) of the moveable device (5).

**7.** A fluid separation system (1) adapted for separating compounds of a fluid, comprising:
- a fluid provider (2) adapted for providing the fluid,
- a separation unit (3) adapted for separating compounds of the fluid,
- a chip (4) according to claim 1 or any one of the above claims,
- a moveable device (5) adapted for contacting the chip (4) and adapted for moving relative to the chip (4).

**8.** The system (1) according to claim 7, comprising at least one of the following features:
- the moveable device (5) is driven to move a contact surface (22) of the moveable device (5) into or through at least one position not used in a normal operation mode of the system (1) in which normal operation mode the moveable device (5) is driven to control at least one inlet port (11) of a microfluidic chip (10) comprising the at least one inlet port (119 and at least one microfluidic channel (12);
- the system (1) is adapted for automatically activating a cleaning mode when a frame comprising the chip (4) and at least one identification-tag, in particular a radio-frequency-chip, is inserted and identified.

**9.** A method for cleaning a moveable device (5), comprising the steps of:
contacting the moveable device (5) with a chip (4) having at least one cleaning cavity (15),
moving the moveable device (5) relative to the chip (4) in order to clean the moveable device (5) by collecting material (26) in the at least one cleaning cavity (15).

**10.** The method according to claim 9,
wherein the movement is executed as a revolving movement with respect to a revolving axis (17) in particular extending perpendicularto the contacted surfaces (16, 22).

**11.** A software program or product, preferably stored on a data carrier, for controlling or executing the method of claim 9 or any one of the above claims, when run on a data processing system such as a computer.
